# EUROPEAN PATENT SPECIFICATION

(11) **EP 1 444 856 B1**
(45) Date of publication and mention of the grant of the patent: **17.10.2012**
(21) Application number: 02777396.9
(22) Date of filing: 15.11.2002
(51) Int. Cl.: H04W 4/12

(54) **ROAMING IN MMS ENVIRONMENT**
ROAMING IN EINER MMS-UMGEBUNG
ITINERANCE EN ENVIRONNEMENT MMS

(30) Priority: 16.11.2001 FI 20012233
(43) Date of publication of application: 11.08.2004
(73) Proprietor: TeliaSonera AB, 10663 Stockholm (SE)
(72) Inventor: JALKANEN, Tero, FIN-00710 Helsinki (FI)
(74) Representative: Virkkala, Antero Jukka
(86) International application number: PCT/FI2002/000910
(87) International publication number: WO 2003/043367

(56) References cited:
- WO-A2-00/57610
- '3rd Generation partnership project; Technical specification group terminals; Multimedia messaging service (MMS); Functional description; Stage 2 (Release 4)' 3GPP TS 23.140 V4.2.0 March 2001, XP002238091

## Description

### BACKGROUND OF THE INVENTION

The invention relates to supporting subscriber roaming in an MMS (Multimedia Messaging Service) environment in particular. An MMS is a 3GPP (Third Generation Partnership Project, cf. www.3gpp.org) specification group for third generation mobile communication services.

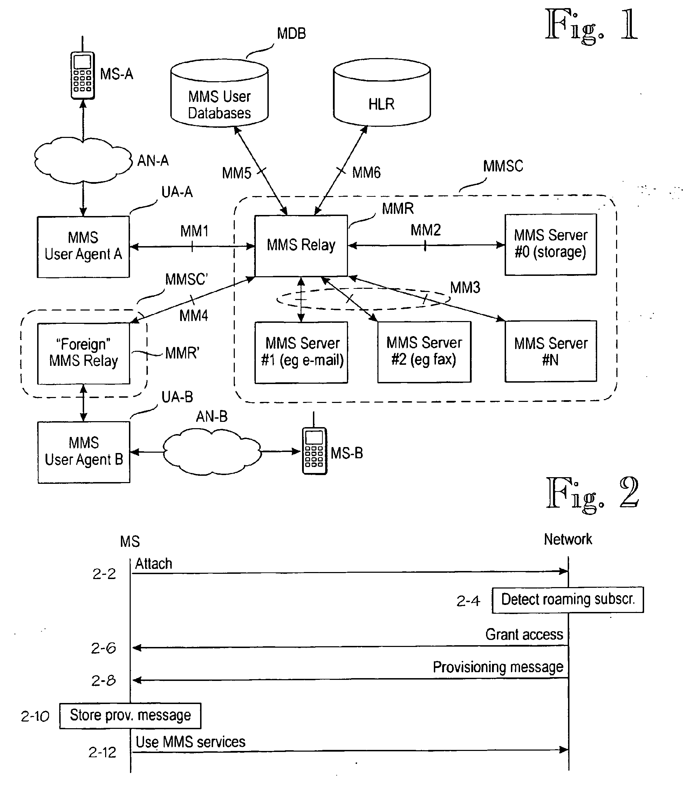

Figure 1 shows a reference architecture specified by the 3GPP. An essential element is an MMSC (Multimedia Messaging Service Centre) MMSC. According to the reference architecture, the multimedia messaging service centre MMSC includes an MMR (MMS Relay) and a number of servers. According to the established naming practice, server 0 is a storage server while other servers 1 to N provide other services, such as e-mail, telefax services etc. The MMS relay MMR is connected to two databases, i.e. subscriber registers: a subscriber database MDB of the MMS and an HLR (Home Location Register). A first terminal (mobile station) MS-A, the information on whose subscriber has been stored in the subscriber registers of the particular MMSC, is connected to the MMSC through an access network AN-A and a first user agent UA-A. A mobile station MS-B located in a visited network is connected to the MMSC through corresponding elements AN-B, UA-B and MMR' in the visited network.

A problem with the above-described system is that the MMS specifications do not adequately take into account the need for supporting a roaming subscriber. In a visited network, e.g. while abroad, a need may arise to be able to utilize the services of a local operator, such as a map of restaurants or time-tables for public transport. These services are, however, often allowed to the clients of a local operator exclusively, i.e. to users who have access to the network of the particular operator. In other words, roaming users cannot use such services and operators cannot charge the roaming users for using the services, either.

WO 00/57610 discloses that devices coupled to a packet-switched data transmission network may exchange multimedia-related information between multimedia messaging transport protocol layers, defined above the Internet protocol layer, in the devices through the use of the Internet protocol layer as well as other lower layers.

### BRIEF DESCRIPTION OF THE INVENTION

An object of the invention is thus to provide a technique for solving the problem mentioned above. The object of the invention is achieved by a method and a network which are characterized by what is disclosed in the independent claims. Preferred embodiments of the invention are disclosed in the dependent claims.

According to the invention, the network detects a new roaming subscriber and, according to a contract between operators, consults the user's home network in order to find out whether or not the subscriber is a subscriber to the MMS provisioning service.

The idea underlying the invention is that a subscriber roaming in a visited network receives an MMS services provisioning message from an operator of the visited network (a roaming operator). The provisioning message includes provisioning information, i.e. information necessary in order for the MMS terminal to be able to contact the network of the roaming operator and to use the services therein. Typically, such provisioning information includes:
- MMSC address
- GPRS APN (access point name)
- WAP GW address
- user identifier
- password
- data mode (connection-oriented/connectionless)
- security level (open/secured).

Ordinarily, a terminal asks a user to make sure that the provisioning information becomes stored on the device. Depending on the implementation of the terminal, a message may also be stored automatically on the terminal. Next, the user may use the MMS services of the roaming network. When the user returns to the home network, provisioning takes place again in accordance with the settings of the home network.

An advantage of the invention is that the services are also available to a roaming subscriber while no external signalling (e.g. separate service layer gateways) is necessary since traffic in its entirety takes place in the network of the roaming operator. The invention requires no great changes to the MMS infrastructure.

The invention enables MMS services to be used even when a roaming operator and a home operator do not have a valid roaming contract. Ordinarily, the user's MMS mobile telephone would be completely useless, but it is now possible to use at least the local services. In addition, if a valid MMS interworking contract exists between the roaming operator and the home operator, it is in principle possible to send MMS messages home therethrough even if roaming does not work in an ordinary manner.

### BRIEF DESCRIPTION OF THE DRAWINGS

The invention is now described in closer detail in connection with the preferred embodiments and with reference to the accompanying drawings, in which
Figure 1 shows a reference architecture specified by 3GPP, and
Figure 2 is a signalling diagram illustrating the operation of the invention.

### DETAILED DESCRIPTION OF THE INVENTION

Figure 2 is a signalling diagram illustrating the operation of the invention. In step 2-2, a roaming subscriber, i.e. the user of a terminal MS, switches on his or her terminal and logs on to a network (attach). In step 2-4, the call is acknowledged and the network detects that the subscriber is a roaming subscriber. In step 2-6, the terminal is allowed to access the network. In step 2-8, the network sends the terminal MS a provisioning message providing information necessary for using the services. In step 2-10, the terminal stores the provisioning message automatically, or the user stores manually the information included in the provisioning message. In step 2-12, the user, utilizing the information included in the provisioning message, is allowed to use the MMS services of the visited network.

According to a preferred embodiment of the invention, a provisioning message is transmitted in a roaming situation to a terminal in response to the user of the terminal calling a certain number reserved for transmitting the provisioning message. Instead of making a call, the user of the terminal may transmit an SMS, EMS or MMS message to a certain number or address. According to a third alternative, the user may activate a service from a WAP/WWW page. Depending on the implementation, the roaming user has to be added to the user database of the MMSC of the visited network in order to allow access to the MMSC. This can be automated e.g. by allowing access to the MMSC to all and, after the first access, the particular user is automatically added to the user database. Correspondingly, it may also be justified to remove the user automatically from the user database of the MMSC of the visited network. This is to say that the user information can be removed automatically in order to clear some space in the database e.g. if the particular user has not used this MMSC (or has not been a roaming client in the particular network) during a given time, e.g. during the last six months.

In order for the roaming user to know what services are available, an MMS message may be sent to him or her as a push message listing the MMS services provided by the visited network as soon as the user has been provisioned. Alternatively, a list of the MMS services being provided can be given even before provisioning the user, which motivates the user to allow the provisioning of his or her telephone in the visited network.

It is apparent to one skilled in the art that the invention is not restricted to the embodiments shown above but, as technology advances, the basic idea of the invention can be implemented in many different ways. The invention and its embodiments are thus not restricted to the examples described above but may vary within the scope of the claims.

## Claims

1. A method for providing Multimedia Messaging Service, MMS, services for a terminal roaming in a visited network, in which method
the terminal transmits an attach request (2-2) to the network and, in response to the attach request, the network provides the terminal with network services (2-8),
the network sends the terminal a provisioning message (2-8) including sufficient information for using the MMS services;
the terminal utilizes the information included in the provisioning message for using the MMS services (2-12),
**characterized in that**
the network detects a new roaming subscriber and, according to a contract between operators, consults a subscriber's home network in order to find out whether or not the subscriber is a subscriber to the MMS provisioning service.

2. A method as claimed in claim 1, **characterized in that** the network sends the terminal a provisioning message in response to the terminal transmitting a call setup request to a certain number reserved for transmitting the provisioning message.

3. A method as claimed in claim 1, **characterized in that** the network sends the terminal a provisioning message in response to the terminal transmitting a Short Message Service , SMS, Enhanced Messaging Service, EMS, or MMS message to a certain number or address reserved for transmitting the provisioning message.

4. A method as claimed in claim 1, **characterized in that** the network sends the terminal a provisioning message in response to the subscriber of the terminal activating an MMS service from a Wireless Application Protocol, WAP, or World Wide Web, WWW, page.

5. A telecommunication network (MMSC, MDB, HLR) for producing Multimedia Messaging Service, MMS, services, the telecommunication network being configured to:
receive an attach request from a terminal (MS),
identify (2-4) the terminal as a roaming terminal if the subscriber of the terminal does not have a subscriber contract with the particular telecommunication network; and
in response to the terminal having been identified as a roaming terminal, send the terminal a provisioning message (2-8) including sufficient information for using the MMS services,
**characterized in that** the telecommunication network is configured to
detect a new roaming subscriber, and
in response to the new roaming subscriber, consult, according to a contract between operators, a subscriber's home network in order to find out whether or not the subscriber is a subscriber to the MMS provisioning service.

## Patentansprüche

1. Verfahren zum Vorsehen eines Multimedia-Datentransferservice-Dienstes, MMS, für ein Anschluss-Roaming in einem betroffenen Netzwerk, wobei bei dem Verfahren
das Datenendgerät eine Anschlussanfrage (2-2) an das Netzwerk überträgt, und in Beantwortung der Anschlussanfrage das Netzwerk das Datenendgerät mit Netzwerkdiensten (2-8) versorgt,
das Netzwerk dem Datenendgerät eine Beschaffungsnachricht (2-8) sendet, welche ausreichend Informationen zur Benutzung der MMS-Dienste beinhaltet;
das Datenendgerät die in der Beschaffungsnachricht enthaltenen Informationen zur Verwendung der MMS-Dienste (2-12) benutzt,
**dadurch gekennzeichnet, dass**
das Netzwerk einen neuen Roaming-Anschlussinhaber feststellt und entsprechend einem Vertrag zwischen Betreibern das Hausnetzwerk eines Anschlussinhabers konsultiert, um herauszufinden, ob der Anschlussinhaber ein Anschlussinhaber des MMS-Beschaffungsdienstes ist oder nicht.

2. Verfahren nach Anspruch 1, **dadurch gekennzeichnet, dass** das Netzwerk dem Datenendgerät eine Beschaffungsnachricht sendet, in Antwort darauf, dass das Datenendgerät eine Anrufinstallationsanfrage an eine bestimmte Nummer überträgt, die zur Übertragung der Beschaffungsnachricht reserviert ist.

3. Verfahren nach Anspruch 1, **dadurch gekennzeichnet, dass** das Netzwerk dem Datenendgerät eine Beschaffungsnachricht in Antwort darauf sendet, dass das Datenendgerät einen Kurzmitteilungsdienst, SMS, erweiterten Mitteilungsdienst, EMS, oder eine MMS Nachricht an eine bestimmte Nummer oder Adresse übermittelt, die zur Übermittlung der Beschaffungsnachricht reserviert ist.

4. Verfahren nach Anspruch 1, **dadurch gekennzeichnet, dass** das Netzwerk dem Datenendgerät eine Beschaffungsnachricht in Antwort darauf sendet, dass der Anschlussinhaber des Datenendgerätes einen MMS-Dienst von einem drahtlosen Anwendungsprotokoll WAP oder einer World-Wide-Web-Seite WWW aktiviert.

5. Telekommunikationsnetzwerk (MMSC, MDB, HLR) zur Erzeugung von Multimedia-Benachrichtigungsdiensten MMS, wobei das Telekommunikationsnetzwerk konfiguriert ist,
um eine Anschlussanfrage von einem Datenendgerät (MS) zu erhalten,
um das Datenendgerät als ein Roaming-Datenendgerät zu identifizieren (2-4), wenn der Anschlussinhaber des Datenendgerätes keinen Anschlussinhaber-Vertrag mit dem besonderen Telekommunikationsnetzwerk hat und
um in Antwort darauf, dass das Datenendgerät als ein Roaming-Datenendgerät identifiziert worden ist, dem Datenendgerät eine Beschaffungsnachricht (2-8) zu senden, welche zur Benutzung der MMS-Dienste ausreichend Information beinhaltet,
**dadurch gekennzeichnet, dass**
das Telekommunikationsnetzwerk eines neuen Roaming-Anschlussinhabers konfiguriert ist,
um einen neuen Roaming-Anschlussinhaber festzustellen und
um in Antwort auf den neuen Roaming-Anschlussinhaber gemäß einem Vertrag zwischen Betreibern das Heimnetzwerk eines Anschlussinhabers zu konsultieren, um herauszufinden, ob der Anschlussinhaber ein Anschlussinhaber des MMS-Beschaffungsdienstes ist oder nicht.

## Revendications

1. Procédé pour fournir des services MMS, Multimedia Messaging Service (service de messagerie multimédia), à un terminal en itinérance dans un réseau visité, dans lequel procédé
le terminal transmet une demande de rattachement (2-2) au réseau et, en réponse à la demande de rattachement, le réseau fournit au terminal des services réseau (2-8),
le réseau envoie au terminal un message d'approvisionnement (2-8) incluant suffisamment d'informations pour utiliser les services MMS ;
le terminal met à profit les informations incluses dans le message d'approvisionnement pour utiliser les services MMS (2-12),
**caractérisé en ce que**
le réseau détecte un nouvel abonné itinérant et, selon un contrat entre opérateurs, consulte le réseau mère d'un abonné afin de savoir si oui ou non l'abonné est un abonné au service d'approvisionnement MMS.

2. Procédé selon la revendication 1, **caractérisé en ce que** le réseau envoie au terminal un message d'approvisionnement en réponse au terminal transmettant une demande d'établissement d'appel à un certain numéro réservé à la transmission du message d'approvisionnement.

3. Procédé selon la revendication 1, **caractérisé en ce que** le réseau envoie au terminal un message d'approvisionnement en réponse au terminal transmettant un message SMS, Short Message Service (service de messages courts), EMS, Enhanced Messaging Service (service de messagerie enrichi) ou MMS à un certain numéro ou à une certaine adresse réservé à la transmission du message d'approvisionnement.

4. Procédé selon la revendication 1, **caractérisé en ce que** le réseau envoie au terminal un message d'approvisionnement en réponse à l'abonné du terminal activant un service MMS à partir d'une page WAP, Wireless Application Protocol (protocole d'application sans fil) ou WWW, World Wide Web (toile d'araignée mondiale).

5. Réseau de télécommunication (MMSC, MDB, HLR) pour produire des services MMS, Multimedia Messaging Service (service de messagerie multimédia), le réseau de télécommunication étant configuré pour :
recevoir une demande de rattachement en provenance d'un terminal (MS),
identifier (2-4) le terminal comme un terminal itinérant si l'abonné du terminal n'a pas de contrat d'abonné avec le réseau de télécommunication particulier ; et
en réponse au terminal ayant été identifié comme un terminal itinérant, envoyer au terminal un message d'approvisionnement (2-8) incluant suffisamment d'informations pour utiliser les services MMS,
**caractérisé en ce que** le réseau de télécommunication est configuré pour
détecter un nouvel abonné itinérant, et
en réponse au nouvel abonné itinérant, consulter, selon un contrat entre opérateurs, le réseau mère d'un abonné afin de savoir si oui ou non l'abonné est un abonné au service d'approvisionnement MMS.
